# FASCICULE DE BREVET EUROPEEN

(11) **EP 3 639 482 B1**
(45) Date de publication et mention de la délivrance du brevet: **02.03.2022**
(21) Numéro de dépôt: 18735660.5
(22) Date de dépôt: 07.06.2018
(51) Int. Cl.: H04L 12/28, H04L 12/24

(54) **PROCÉDÉ DE CONFIGURATION D'UNE UNITÉ CENTRALE DE COMMANDE APPARTENANT À UNE INSTALLATION DOMOTIQUE**
VERFAHREN ZUR KONFIGURATION EINER ZENTRALEN STEUEREINHEIT EINER HEIMAUTOMATISIERUNGSANLAGE
METHOD OF CONFIGURING A CENTRAL CONTROL UNIT BELONGING TO A HOME-AUTOMATION INSTALLATION

(30) Priorité: 14.06.2017 FR 1755374
(43) Date de publication de la demande: 22.04.2020
(73) Titulaire: Overkiz, 74370 Metz-Tessi (FR)
(72) Inventeur: POGNANT, Sylvain, 74600 Seynod (FR)
(74) Mandataire: Germain Maureau
(86) Numéro de dépôt international: PCT/FR2018/051320
(87) Numéro de publication internationale: WO 2018/229397

(56) Documents cités:
- US-A1- 2010 257 584
- US-A1- 2016 050 116
- US-A1- 2017 054 615

## Description

### Domaine de l'invention

La présente invention concerne un procédé de configuration d'au moins une unité centrale de commande ou un dispositif domotique appartenant à une installation domotique.

### Art antérieur

Une installation domotique d'un bâtiment peut comprendre un ou plusieurs dispositifs domotiques. Il est connu de procéder au contrôle, c'est à dire à la commande et/ou à la supervision de ladite installation en utilisant au moins une unité centrale de commande qui communique avec un ou plusieurs dispositifs domotiques. Une telle unité centrale de commande peut être intégrée à un dispositif domotique ou indépendante.

Une unité centrale de commande doit être configurée pour permettre son interaction avec le ou les dispositifs domotiques ou des services fonctionnels à distance, comme par exemple un service utilisateur.

Un grand nombre de configurations différentes peuvent être envisagées pour une même unité centrale de commande, ce qui implique de mettre en œuvre un procédé de configuration adapté notamment en fonction des dispositifs ou des services à connecter, et à suivre de façon précise l'acheminement d'une unité ainsi configurée jusqu'à une installation domotique déterminée à laquelle correspond cette configuration, ou de procéder à une configuration in situ lors de la mise en place de l'unité centrale de commande dans l'installation domotique, cette configuration pouvant se révéler complexe.

La réalisation de la configuration en usine par un stockage en mémoire de la configuration peut être réalisée lors de la production ou en procédant à une reprogrammation en sortie de stock. Toutefois, ces opérations impliquent de spécialiser le procédé de production ou de sortie de stock pour une unité centrale de commande. Cette spécialisation qui rend ce procédé complexe et plus coûteux.

US2010/257584 divulgue la configuration d'un système de réseau domestique. Les informations de configuration du réseau domestique peuvent être stockées sur un système hôte d'une manière accessible au système de réseau domestique et transférées vers une passerelle ou un routeur de réseau domestique qui n'a pas encore été configuré. Les informations de configuration peuvent être stockées sur une passerelle ou un routeur de réseau domestique et utilisées pour configurer un ou plusieurs points d'accès sans fil par le biais d'une connexion physique, telle qu'une voie de communication câblée. Un ou plusieurs dispositifs de réseau domestique sans fil peuvent être configurés sur la base des informations de configuration sans fil stockées dans un référentiel central sur un système hôte ou un système de réseau domestique. Les informations de configuration sans fil peuvent être accessibles uniquement par l'utilisation d'un code de sécurité. La passerelle est configurée automatiquement de manière totalement transparente pour l'utilisateur.

La présente invention a pour but de résoudre tout ou partie des inconvénients mentionnés ci-dessus.

### Exposé de l'invention

A cet effet, la présente invention concerne un procédé de configuration d'une unité centrale de commande comprenant au moins un module de communication destinée au contrôle et/ou à la commande d'au moins un dispositif domotique, ladite unité centrale de commande appartenant à une installation domotique ou d'un dispositif domotique comprenant une unité centrale de commande et appartenant à une installation domotique, le procédé étant mis en œuvre par l'unité centrale de commande et comprenant les étapes suivantes :
- Obtention d'un identifiant de localisation d'un premier service distant de configuration ;
- Envoi d'une demande de configuration à destination du premier service distant de configuration en utilisant l'identifiant de localisation et en lien avec un identifiant de l'unité centrale de commande ;
- Réception d'au moins un ensemble de données ou d'instructions de configuration et/ou d'au moins un identifiant d'un deuxième service distant fonctionnel en provenance du premier service distant de configuration ;
- Configuration sur la base de l'au moins un ensemble de données ou d'instructions de configuration et/ou de l'au moins un identifiant d'un deuxième service distant fonctionnel ;

Grâce aux dispositions selon l'invention, l'unité centrale de commande peut être configurée de façon minimale et générique lors de sa distribution. Lors de la mise en service de cette unité centrale, la configuration adéquate est obtenue à partir du service de configuration. Ces dispositions permettent par exemple de configurer la connexion à un service utilisateur particulier pour la commande et/ou la supervision. Elles permettent également de procéder à une adaptation géographique, pour se connecter à des serveurs différents en fonction de la zone géographique, à une adaptation des bandes de fréquence de communication, pour communiquer dans des bandes de fréquence autorisées en fonction de la zone géographique. Il est également possible de procéder à une configuration de l'offre fonctionnelle de l'unité centrale de commande ou du dispositif domotique, ou encore à la configuration de l'interface homme-machine. La configuration peut également comprendre un téléchargement d'un composant logiciel ou d'une partie de composant logiciel à exécuter sur l'unité centrale de commande.

Le référencement, le stockage et la logistique d'acheminement des unités centrales de commande est ainsi grandement simplifiée.

Au sens de la présente invention, un dispositif domotique est un équipement domotique et/ou un capteur, ou encore une partie d'équipement domotique ou une partie de capteur correspondant à un sous-ensemble fonctionnel. Un dispositif domotique peut également correspondre à un point de commande d'autres dispositifs domotiques.

Au sens de la présente invention, une installation est un ensemble comprenant une pluralité de dispositifs domotiques et au moins une unité centrale de commande disposés dans un seul bâtiment ou sur une pluralité de lieux, chaque dispositif domotique étant relié à une unité centrale de commande parmi la pluralité d'unités centrales de commande, la pluralité d'unités centrales de commande formant un groupe sous le contrôle d'un utilisateur. Les dispositifs électroniques forment des groupes d'au moins un dispositif domotique rattaché à une unité centrale de commande.

Au sens de la présente invention, une unité centrale de commande de l'installation domotique est une unité électronique comprenant :
- au moins une unité de traitement pour contenir et exécuter au moins un programme d'ordinateur,
- au moins un module de communication destinée au contrôle et/ou à la commande d'au moins un dispositif domotique ; et
- au moins un module de communication avec l'unité de gestion.

L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques. Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API (pour ^{«}*Application Program Interface*^{»} selon la terminologie anglo saxonne).

Il est également possible que l'unité centrale de commande soit intégrée à un routeur et/ou à un modem réalisant une connexion à un réseau étendu, notamment à Internet.

Au sens de la présente invention, un premier service de configuration est destiné à identifier la configuration technique correcte pour le dispositif domotique ou l'unité centrale de commande considérée et à communiquer des informations de configuration à l'unité centrale de commande. En particulier, le service de configuration permet d'affecter une unité centrale de commande ou un dispositif domotique à un service utilisateur.

Au sens de la présente invention, un premier service d'inscription permet de procéder à l'inscription par un utilisateur d'une unité centrale de commande ou un dispositif domotique à un service utilisateur. Par utilisateur, il peut être compris un utilisateur final, un installateur ou encore un opérateur de maintenance. Alternativement, la demande d'inscription peut être émise directement par le produit lors de sa mise en service par une connexion sur ce service.

Ces deux services seront décrits de façon distincte, mais peuvent être confondus et hébergés par la même unité de gestion ou par des unités de gestion distinctes.

Au sens de la présente invention, un deuxième service ou service fonctionnel correspond à un service utilisateur destiné au contrôle et/ou à la commande et/ou à la supervision de l'installation domotique par un utilisateur ou par une application. Le service fonctionnel est un service informatisé accessible à distance, qui permet l'accès à au moins une fonction de commande ou de supervision d'une installation domotique ou d'un dispositif domotique, au moyen d'une interface utilisateur ou d'une application. L'interface utilisateur peut être accessible par une interface graphique, ou par l'intermédiaire d'une interface de programmation.

Selon un aspect de l'invention, l'unité de gestion exécutant le premier service est un serveur connecté à distance à l'au moins une installation domotique, par l'intermédiaire d'un réseau étendu. Il est à noter que le terme serveur est une désignation logique qui peut recouvrir l'utilisation de plusieurs serveurs physiques pour répartir la charge de traitement informatique à réaliser.

Selon un autre aspect de l'invention, la ou les unités de gestion exécutant le premier service de configuration et/ou d'inscription peut être une unité centrale destinée à être reliée à une ou plusieurs unités centrales de commande sur des réseaux privés ou locaux distincts, ou encore sur le même réseau local.

L'unité de gestion exécutant le deuxième service est un serveur connecté à distance avec l'unité de gestion exécutant le premier service. Comme précédemment, le terme serveur est une désignation logique qui peut recouvrir l'utilisation de plusieurs serveurs physiques pour répartir la charge de traitement informatique à réaliser.

Les différents services mentionnés peuvent être mis en œuvre par une même unité de gestion, ou par des unités de gestion distinctes.

Les premiers services peuvent être sous le contrôle d'une première entité et le deuxième service peut être sous le contrôle d'une deuxième entité.

A titre d'exemple, la première entité peut être un fournisseur d'infrastructure ou de gestion d'installation domotiques, et la deuxième entité peut être un fournisseur de services en lien avec les données ou la commande de dispositifs domotique.

La supervision correspond de façon générale à une supervision basée sur le traitement de valeurs des variables d'état d'au moins un dispositif domotique ou une unité centrale de commande.

Au sens de la présente invention, une variable d'état est un élément descriptif de l'état d'un dispositif domotique. La valeur d'une variable d'état peut correspondre à la marche ou à l'arrêt pour un interrupteur, ou à un degré ou pourcentage d'ouverture pour un volet. Par ailleurs, une variable d'état peut correspondre à une valeur de mesure d'un capteur, par exemple à une valeur d'une grandeur physique ou d'environnement. La description des états des dispositifs peut être générique ou spécialisée, en fonction du protocole local. Les identifiants des variables d'état peuvent être numériques ou alphanumériques. Les valeurs des variables d'états peuvent utiliser des formats ou des échelles personnalisées ou propriétaires.

Au sens de la présente invention, une commande correspond à un ordre pouvant être donné à un dispositif domotique ou à une unité centrale de commande en vue de la réalisation d'une action par un dispositif ou de l'obtention en retour d'une information, par exemple d'une information relative à une variable d'état de ce dispositif.

Au sens de la présente invention, un message est un élément d'information notifié ou réceptionné via un module de communication depuis un équipement extérieur, ou sous la forme d'un appel synchrone ou asynchrone, pouvant également correspondre à un appel de fonction local ou distant.

Selon un aspect de l'invention, l'obtention de l'identifiant de localisation est réalisée en collectant cet identifiant dans la mémoire de l'unité centrale de commande. Cet identifiant est stocké dans la mémoire lors d'une pré-configuration, par exemple réalisée en usine. Grâce à ces dispositions, une préconfiguration minimale et uniforme pour un grand nombre d'unité centrale de commande est réalisée, le reste de la configuration étant obtenue au cas par cas du service de configuration.

Selon un mode de mise en œuvre, procédé comprend une étape préalable de branchement ou d'initialisation de l'unité centrale de commande.

Ce branchement/initialisation peut être déclenché par une alimentation électrique ou par un ordre provenant dans une étape d'une instruction de l'utilisateur par une action physique sur l'unité centrale de commande tel qu'un appui sur un bouton ou un envoi d'instruction par l'intermédiaire d'un terminal.

Selon un aspect de l'invention, l'envoi de la demande de configuration peut correspondre à une tentative de connexion vers le service de configuration. Cette tentative de connexion identifie l'unité centrale de commande par l'identifiant.

Selon un aspect de l'invention, le procédé comprend en outre l'étape suivante :
- Etablissement d'une communication à destination du service fonctionnel ;

Selon un aspect de l'invention, une communication peut correspondre à une connexion, permanente ou non, ou une émission d'information de façon périodique ou événementielle.

Selon un aspect de l'invention, le procédé comprend en outre les étapes suivantes :
- Réception d'au moins un deuxième ensemble de données ou d'instructions de configuration en provenance du deuxième service distant fonctionnel ;
- Configuration complémentaire sur la base du deuxième ensemble de données ou d'instructions de configuration ;

Cette configuration peut correspondre à un téléchargement d'un élément logiciel par exemple, ou à la réalisation d'une configuration complémentaire de services.

La présente invention concerne également un procédé de configuration d'une unité centrale de commande comprenant au moins un module de communication destinée au contrôle et/ou à la commande d'au moins un dispositif domotique, ladite unité centrale de commande appartenant à une installation domotique ou d'un dispositif domotique comprenant une unité centrale de commande et appartenant à une installation domotique, le procédé étant mis en œuvre par un premier service d'accès à distance de configuration exécuté par une unité de gestion et comprenant les étapes suivantes :
- Réception d'une demande de configuration en provenance de l'unité centrale de commande en lien avec un identifiant de l'unité centrale de commande ;
- Détermination d'au moins un ensemble de données ou d'instructions de configuration et/ou d'au moins un identifiant d'un deuxième service distant fonctionnel associé à l'identifiant de l'unité centrale de commande dans un référentiel d'affectation ;
- Envoi d'un message de configuration comprenant l'au moins un ensemble de données ou d'instructions de configuration et/ou l'au moins un identifiant d'un deuxième service distant fonctionnel ;

Selon un aspect de l'invention, le procédé comprend en outre une étape d'envoi d'informations de configuration.

Selon un aspect de l'invention, le procédé comprend en outre les étapes suivantes :
- Réception d'une demande d'enregistrement en relation avec un identifiant unique de l'unité centrale de commande ou du dispositif domotique comprenant l'unité centrale de commande et avec un deuxième service fonctionnel ;
- Enregistrement dans un référentiel d'affectation d'une association entre l'unité centrale de commande ou de son identifiant en lien avec un service fonctionnel ;

Selon un aspect de l'invention, la demande d'enregistrement est subséquente à une demande d'inscription reçue en lien avec un identifiant d'un compte utilisateur. Selon une possibilité, la demande d'inscription provient d'un utilisateur final. Alternativement, la demande d'inscription peut être émise directement par le produit lors de sa mise en service par une connexion sur le service de configuration.

Selon un aspect de l'invention, l'identifiant unique peut par exemple comprendre une adresse MAC ou un numéro de série. Cet identifiant peut se présenter sous la forme d'un QR-Code ou autre code barre lisible de façon optique sur l'unité centrale de commande ou le dispositif ou leur conditionnement, ou encore sous forme d'une étiquette RFID ou NFC lisible par un dispositif à disposition de l'utilisateur, comme par exemple un terminal de communication mobile.

Selon un aspect de l'invention, la demande d'inscription comprend au moins un choix d'option associé au service fonctionnel.

Selon un aspect de l'invention, l'étape d'enregistrement comprend un enregistrement d'informations complémentaires de configuration.

L'enregistrement peut être demandé par le premier service d'inscription au premier service de configuration. La demande d'inscription peut comprendre dans ce cas un choix de service fonctionnel, l'identifiant de l'unité centrale de commande. Cette demande peut également comprendre, un choix d'offre de service et d'éventuelles options de configuration. Le service de configuration peut ensuite confirmer l'enregistrement au service d'inscription.

Selon un aspect de l'invention, le procédé comprend en outre l'étape suivante :
- Inscription dans un référentiel utilisateur d'une association entre l'unité centrale de commande ou de son identifiant en lien avec un utilisateur ;

Selon un aspect de l'invention, l'étape d'enregistrement comprend un enregistrement d'informations complémentaires de configuration.

Selon une possibilité, l'inscription est opérée par le deuxième service fonctionnel.

Ainsi, le premier service d'inscription envoie une demande d'inscription au deuxième service fonctionnel comprenant l'identifiant de l'unité centrale de commande, l'identifiant de l'utilisateur. La demande peut également comprendre un choix d'offre de service et d'éventuelles options de configuration.

Le deuxième service envoie une confirmation de cette inscription au service d'inscription.

Le premier service d'inscription peut ensuite confirmer l'inscription à l'utilisateur par l'intermédiaire de son terminal.

Selon un aspect de l'invention, le procédé comprend en outre l'étape suivante :
- Vérification de la disponibilité de l'identifiant unique auprès d'un référentiel d'affectation ;

Selon une possibilité, le référentiel d'affectation est mis en œuvre par le premier service de configuration. Le premier service d'inscription peut envoyer une demande de vérification à ce service. Le résultat de la vérification est communiqué au premier service d'inscription.

La constatation de la disponibilité de l'identifiant est un pré-requis pour la configuration de l'unité centrale de commande. Dans le cas contraire, cela signifie que la demande d'inscription ne peut aboutir car l'unité centrale de commande est déjà associée à un service. Il convient dans ce cas de résoudre un conflit concernant cet identifiant.

Selon un aspect de l'invention, le procédé comprend en outre l'étape suivante :
- Vérification de l'existence et des droits de l'utilisateur correspondant à l'identifiant auprès d'un référentiel utilisateur.

Selon une possibilité, le référentiel utilisateur est mis en œuvre par le deuxième service fonctionnel. Dans ces conditions, le premier service de configuration ou d'inscription ou envoie une demande de vérification à ce service. Le résultat de la vérification est communiqué au premier service.

La constatation de la validité du compte utilisateur est un pré-requis pour la configuration de l'unité centrale de commande. Dans le cas contraire, cela signifie que la demande d'inscription ne peut aboutir car le compte utilisateur associé sur le service n'est pas valide ou n'existe pas. Il convient donc de déterminer un compte utilisateur valide sur ce service avant de poursuivre l'inscription.

Les différents aspects définis ci-dessus non incompatibles peuvent être combinés.

### Brève description des figures

L'invention sera mieux comprise à l'aide de la description détaillée qui est exposée ci-dessous en regard des dessins annexés sur lesquels :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1, une deuxième installation domotique, ainsi qu'une pluralité de serveurs destinés à être connecté aux installations domotiques ;
La figure 3 est un schéma illustrant un mode de mise en œuvre d'un procédé de configuration.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

### Description d'un système comprenant une installation domotique

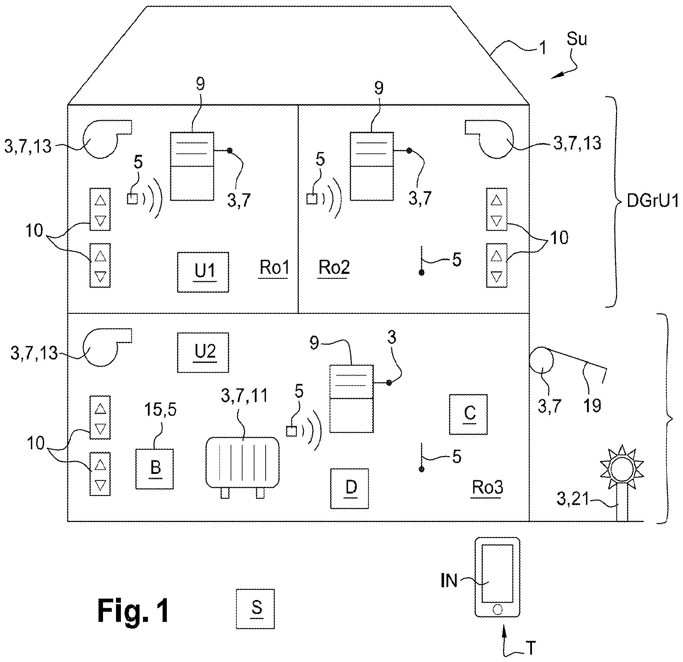

Comme illustré à la figure 1, un bâtiment 1 comprend à titre d'exemple trois pièces Ro1, Ro2, Ro3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique Su peut également comprendre un point de commande 15 d'un actionneur 7, comme un boîtier de commande B sans fil pour le volet roulant 9.

L'installation domotique Su peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence. L'installation peut encore comprendre un ou plusieurs capteurs de consommation électrique.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique Su.

Les équipements domotiques 3 et les capteurs 5 peuvent ainsi avoir accès à toute grandeur physique mesurable, comme la température de chaque pièce Ro1, Ro2, Ro3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

Les dispositifs domotiques comprennent de façon générale une unité de traitement comprenant un processeur exécutant un logiciel embarqué. Ce logiciel fait l'objet de mises à jour pour en améliorer les fonctions ou procéder à des corrections.

L'installation domotique Su comprend une unité centrale de commande ou une pluralité d'unités centrales de commande Ul, U2. En particulier et à titre d'exemple, deux unités centrales de commande Ul, U2 sont représentées sur la figure 1. Selon une variante, une installation domotique peut comprendre également une unité centrale de commande unique.

Chaque unité centrale de commande Ul, U2 est agencée pour commander et/ou contrôler une partie des dispositifs D de l'installation Su formant un groupe DGrU1, DGrU2. A titre d'exemple, sur la figure 1, l'unité centrale de commande U1 est en charge des dispositifs D disposés dans les pièces Ro1 et Ro2 du premier étage du bâtiment, alors que l'unité centrale de commande U2 est en charge des dispositifs D disposés dans la pièce Ro3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande Ul, U2 est agencée pour regrouper l'ensemble des données en provenance des dispositifs D de son groupe DGrU1, DGrU2 et pour traiter ces données.

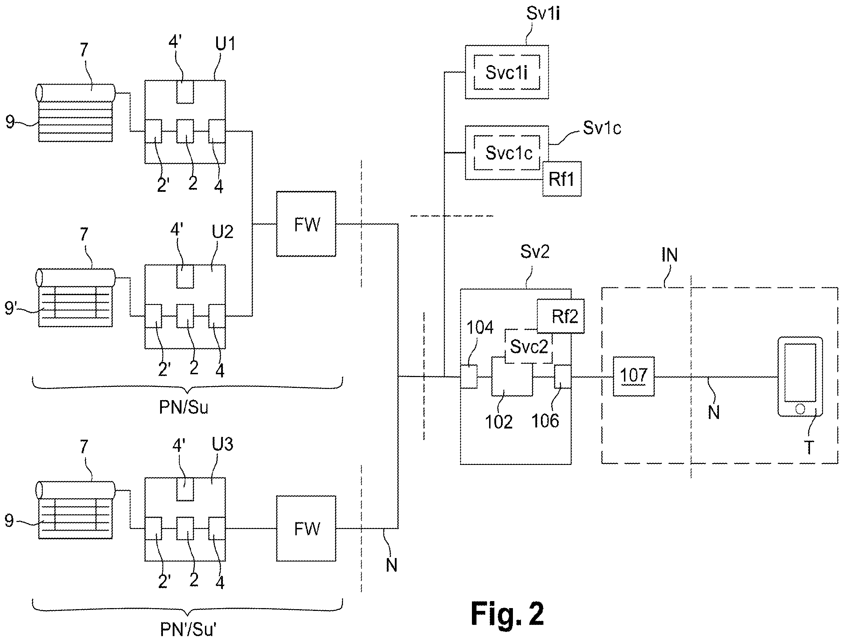

Comme cela est représenté sur la figure 2, chaque unité centrale de commande U est agencée pour communiquer avec un ou plusieurs serveurs distants Svli, Sv1c, Sv2.

Les unités centrales de commande Ul, U2, U3 sont disposées sur un réseau privé PN, PN', dont l'accès est en général protégé par un pare-feu FW. En particulier, dans l'exemple représenté sur la figure 2, deux unités centrales de commandes Ul, U2 sont disposées sur un premier réseau privé correspondant à une première installation domotique, alors qu'une troisième unité centrale de commande U3 est disposée sur un deuxième réseau privé PN', indépendant du réseau privé PN correspondant à une deuxième installation domotique Su'. Le réseau privé PN est relié à un réseau étendu N, par exemple Internet. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'une mémoire vive, et d'une puce Ethernet.

L'unité de traitement exécute un logiciel embarqué. Ce logiciel fait l'objet de mises à jour pour en améliorer les fonctions ou procéder à des corrections.

L'unité centrale de commande U comprend, en outre, au moins un module de communication 2' destiné au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1, selon un premier protocole de communication local.

A titre d'exemple, le module de communication 2' peut être agencé pour mettre en œuvre par exemple un ou plusieurs des premiers protocoles locaux P1 par exemple de type Z-Wave, EnOcean, IO Homecontrol, Somfy RTS, KNX, MODBUS, Wavenis, Philips HUE. Ces premiers protocoles locaux sont des protocoles de communication locaux en général non IP.

Selon une autre possibilité, par exemple dans le cadre de systèmes d'alarme, l'unité centrale de commande peut être intégrée dans le dispositif domotique. Selon encore une autre possibilité, Il est également possible que l'unité centrale de commande soit intégrée à un routeur et/ou à un modem réalisant une connexion à un réseau étendu, notamment à Internet.

Lorsque l'unité centrale de commande est intégrée à un dispositif domotique, le module de communication 2' destiné au contrôle et/ou à la commande du dispositif peut être un module de communication interne au dispositif domotique et/ou un module de communication destiné au contrôle et/ou à la commande d'autres dispositifs domotiques.

La réception d'informations d'un capteur 5 fournissant des informations de présence d'un utilisateur ou des valeurs des paramètres environnants, comme la température, l'humidité et la luminosité, est également prévue. De la même façon, l'unité centrale de commande U peut permettre le contrôle et/ou la commande d'un système d'alarme.

Chaque unité centrale de commande U peut comprendre, en outre, un module de communication 4' pour communiquer selon un autre protocole de communication que le premier protocole local. Le deuxième protocole de communication cible peut par exemple être un protocole de communication au dessus du protocole IP sur un réseau local, ou encore un protocole générique point à point. A titre d'exemple, le protocole applicatif WEAVE utilisant des protocoles de transport 6lowpan et thread pour un réseau maillé peuvent constituer un deuxième protocole cible. D'autres exemples incluent Bluetooth, Zigbee ou Wifi.

Le terminal de communication T peut contenir et exécuter un logiciel d'application APP.

Chaque unité centrale de commande U comprend, en outre, un module de communication 4 avec des serveurs distants Svli, Sv1c, Sv2.

Le serveur Sv2 permet la commande et/ou le contrôle à distance et comprend une ou plusieurs unités de traitement 102 agencée pour contenir et exécuter un deuxième programme d'ordinateur.

Dans certaines applications, une unité centrale de commande U peut communiquer avec le serveur Sv2 à travers un serveur intermédiaire, par exemple d'un fournisseur de service tiers, dont le serveur intermédiaire offre une interface de service ou API. Le serveur Sv2 comprend, de son côté, au moins une interface de communication 104 destinée à la communication avec l'unité centrale de commande U.

Le serveur Sv2 peut comprendre également une interface de communication 106 destinée à la communication avec une interface de commande et/ou de contrôle IN permettant à un utilisateur final Usr1 de contrôler à distance l'installation domotique, notamment par l'intermédiaire d'un service fonctionnel Svc2.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette. Le terminal de communication mobile T peut être le même ou un terminal du même type que celui avec lequel l'unité centrale de commande U communique en local au moyen du module de communication 4', ou un terminal différent. Nous désignerons indifféremment ces terminaux mobiles par la référence T. Alternativement, l'utilisateur final pourrait également faire usage d'un terminal fixe.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

Le Serveur Sv2 peut également utiliser l'interface de communication 104 ou une autre interface pour la communication avec un autre serveur ou plusieurs serveurs Svli et Sv1c d'inscription et de configuration mettant en œuvre des services d'inscription et de configuration Svc1i et Svclc que nous décrirons ultérieurement.

Cette interface permet la communication entre les serveurs Svli, Sv1c et Sv2 sur un réseau local ou étendu, par exemple Internet.

Les serveurs Sv1c et Svli peuvent reprendre la même architecture que celle du serveur Sv2.

### Identifiant unique d'un dispositif domotique

Les serveurs Sv2, Svli et Sv1c, les services Svc1i, Svclc et Svc2 ainsi que les unités centrales de commandes U peuvent utiliser un identifiant unique pour identifier les dispositifs domotiques. La structure d'un identifiant unique d'un dispositif domotique DURL va être à présent décrite de façon correspondante à un mode de réalisation particulier.

Selon ce mode de réalisation, l'identifiant unique d'un dispositif domotique comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemld si le dispositif appartient à un groupe de dispositifs D associés à une même adresse. Les dispositifs qui sont une expression unique d'une adresse ne présentent pas d'extension d'identification d'un sous-système.

Ainsi, la forme de l'identifiant unique d'un dispositif DURL peut être la suivante :
<protocol>://<gatewayId>/<rawDeviceAddress>(#<subsystemId>)

Dans laquelle les champs suivants sont présents :
protocol : identifiant du protocole local de dispositif natif;
gatewayld : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemld : ce champ optionnel indique une identification, par exemple un rang du sous-système (démarrant par exemple à 1), si un tel sous-système est présent.

### Exemples

### 1) knx://0201-0001-1234/1.1.3

Cet identifiant unique DURL correspond à un dispositif D communiquant par le protocole KNX avec une adresse individuelle 1.1.3 accessible par l'unité centrale de commande U portant l'identifiant #0201-0001-1234.

### 2) io://0201-0001-1234/145036#2

Cet identifiant unique GDURL correspond à un sous-système portant le n°2 associé à un dispositif D communiquant par le protocole io homecontrol avec une adresse radio 145036 accessible par l'unité centrale de commande U portant l'identifiant #0201-0001-1234.

### Premier service d'inscription et/ou de configuration et deuxième service

Le premier service de configuration Svclc est destiné à identifier la configuration technique correcte pour le dispositif domotique ou l'unité centrale de commande considérée et à communiquer des informations de configuration à l'unité centrale de commande. En particulier, le service de configuration Svclc permet d'affecter une unité centrale de commande ou un dispositif domotique à un service utilisateur.

Le premier service d'inscription Svc1i permet de procéder à l'inscription par un utilisateur d'une unité centrale de commande ou un dispositif domotique à un service utilisateur. Par utilisateur, il peut être compris un utilisateur final, un installateur ou encore un opérateur de maintenance. Alternativement, la demande d'inscription peut être émise directement par l'unité centrale de commande U ou le dispositif domotique D comprenant l'unité centrale de commande U lors de sa mise en service par une connexion sur ce service Svc1i.

Ces deux premiers services Svclc et Svc1i seront décrits de façon distincte, mais peuvent être confondus. Ces deux premiers services peuvent être hébergés par le même serveur ou groupe de serveurs ou par des serveurs ou groupes de serveur distincts Svli et Sv1c comme cela est décrit à titre d'exemple sur la figure 2.

Le deuxième service ou service fonctionnel Svc2 correspond à un service utilisateur destiné au contrôle et/ou à la commande et/ou à la supervision de l'installation domotique par un utilisateur ou par une application. Le service fonctionnel est un service informatisé accessible à distance, qui permet l'accès à au moins une fonction de commande ou de supervision d'une installation domotique ou d'un dispositif domotique, au moyen d'une interface utilisateur ou d'une application. L'interface utilisateur peut être accessible par une interface graphique, ou par l'intermédiaire d'une interface de programmation.

Le service Sv2 peut être mis en œuvre par le même serveur que les premiers services, ou par un autre serveur ou groupe de serveur Sv2, comme cela est décrit à titre d'exemple sur la figure 2.

Les premiers services Svcli, Sv1c peuvent être sous le contrôle d'une première entité et le deuxième service Svc2 peut être sous le contrôle d'une deuxième entité.

A titre d'exemple, la première entité peut être un fournisseur d'infrastructure ou de gestion d'installation domotiques, et la deuxième entité peut être un fournisseur de services en lien avec la supervision ou la commande de dispositifs domotique.

### Référentiel d'affectation

Le premier service Svclc de configuration met en œuvre un référentiel d'affectation R1. Le référentiel d'affectation R1 stocke la correspondance entre un identifiant d'une unité centrale de commande U et un identifiant d'un deuxième service fonctionnel Svc2. Le tableau 1 ci-dessous donne un exemple d'une première structure de donnée du référentiel R1. Ce référentiel peut également comprendre des informations de configuration optionnelles.

**Tableau 1: Exemple de deuxième structure de donnée du référentiel Rf**

| Identifiant d'unité centrale de commande UID | Identifiant de service fonctionnel | Configuration spécifique cfg optionnelle |
|---|---|---|
| UID1 | Svc2ID1 | Cfg11 |
| UID2 | Svc2ID2 | Cfg12 |

A titre d'exemple, le référentiel peut être constitué par une base de données ou un service de répertoire. Ce référentiel peut être compris dans le premier service de configuration Svclc ou externe et accessible par le premier service de configuration Svclc.

### Référentiel utilisateur

Afin de définir la configuration devant être appliquée à une unité centrale de commande U, le deuxième service fonctionnel Svc2 peut utiliser un référentiel Rf2, qui peut être compris dans le référentiel de d'affectation ou distinct, mais accessible par le deuxième service fonctionnel Svc2.

Le référentiel utilisateur Rf2 comprend des associations entre un identifiant d'unité centrale de commande UID, Identifiant de compte utilisateur USrID, et éventuellement une configuration fonctionnelle spécifique cfgF. Un exemple de table de définition contenue dans le référentiel utilisateur Rf2 est représenté ci-dessous dans le tableau 2.

**Tableau 2: Exemple de table de définition dans le référentiel Rf2**

| Identifiant d'unité centrale de commande UID | Identifiant d'utilisateur USrID | Configuration fonctionnelle spécifique cfg2 optionnelle |
|---|---|---|
| UID1 | UsrID1 | Cfg21 |
| UID2 | UsrID2 | Cfg22 |

### Procédé de configuration

### Premier mode de réalisation

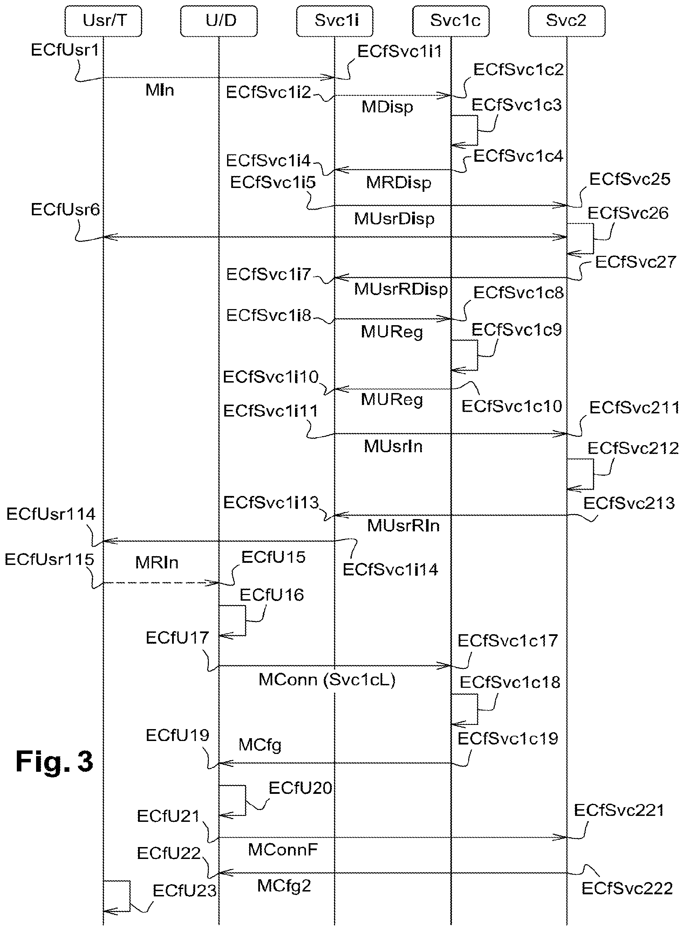

Nous allons à présent décrire un procédé de configuration d'un accès à distance à au moins un dispositif domotique D appartenant à une installation domotique Su en référence à la figure 3.

Dans un état initial, l'utilisateur Usr a fait l'acquisition ou obtient un dispositif domotique D et/ou une unité centrale de commande U.

Le dispositif domotique D ou l'unité centrale de commande U contient au moins un identifiant de localisation Svc1cL correspondant à une information relative à l'adresse du service Svclc.

Selon une variante, l'unité centrale de commande U peut contenir une pluralité de services Sv1c accessibles en fonction de la zone géographique. Dans ces conditions, l'unité centrale de commande pourra tenter d'entrer en communication successivement avec ces services.

En revanche, le dispositif domotique D ou l'unité centrale de commande U n'a pas d'informations relatives au service fonctionnel Svc2. Par ailleurs, la configuration de l'unité centrale de commande U ou du dispositif domotique D peut être incomplète en ce qui concerne :
- la configuration technique ;
- tout ou partie de son logiciel ;
- la connectivité au serveur ;
- son comportement ;
- les offres fonctionnelles ou commerciales à implémenter.

Dans une étape préalable, le service Svc1 obtient une liste des services SvC2 possible, ainsi que l'adresse du service Sv1D, ainsi qu'un catalogue d'offres de services.

Dans une étape ECfUsr1, l'utilisateur final Usr émet une demande d'inscription Mln auprès du service Svc1i qui reçoit cette demande dans une étape ECfSvc1i1. La demande d'inscription comprend notamment un identifiant unique UID de l'unité centrale de commande U ou du dispositif domotique D comprenant l'unité centrale de commande U. Cet identifiant unique UID peut par exemple comprendre une adresse MAC ou un numéro de série. Cet identifiant peut se présenter sous la forme d'un code QR (ou QR-Code pour « Quick Response Code » selon la terminologie anglo-saxonne) ou autre code barre à une ou deux dimensions lisible de façon optique sur l'unité centrale de commande U ou le dispositif D ou leur conditionnement, ou encore sous forme d'une étiquette d'identification radiofréquence (ou RFID pour ^{«} Radio Frequency Identification" selon la terminologie anglo-saxonne), une étiquette de communication en champ proche (ou NFC pour ^{«}Near Field Communication^{»} selon la terminologie anglo-saxonne) ou toute autre étiquette lisible par un dispositif à disposition de l'utilisateur, comme par exemple un terminal de communication mobile T.

La demande d'inscription comprend également l'identifiant UsrID de l'utilisateur si l'utilisateur possède un compte utilisateur. La demande d'inscription comprend également un choix de service à associer à l'unité centrale de commande U. La demande d'inscription peut également comprendre au moins un choix d'option. Les options peuvent correspondre à titre d'exemple : au nombre et à la nature des protocoles de communication domotique ou autres activés; à l'activation ou non d'une remontée de valeurs de capteur pour une historisation sur l'unité de gestion ; à une fixation d'une limite du nombre de dispositifs domotiques appairables.

Le service Svc1i procède à une vérification de la disponibilité de l'identifiant unique UID auprès d'un référentiel Rf1 d'affectation. Selon une possibilité, ce référentiel Rf1 est mis en œuvre par un service Svclc de configuration et de répartition. Dans ces conditions, le service Svc1i d'inscription envoie une demande de vérification dans une étape ECfsvcli2.

Le service de configuration Sv1c reçoit la demande MDisp dans une étape ECfSvclc2 et procède à la vérification dans une étape ECfSvclc3. Le résultat de la vérification MRDisp est communiqué au service Svc1i dans une étape EcfSvc1c4, qui le reçoit dans une étape ECfSvc1i4. Nous supposerons dans ce cas que la disponibilité de l'identifiant UID a été constatée. Dans le cas contraire, cela signifie que la demande d'inscription ne peut aboutir car l'unité centrale de commande est déjà associée à un service. Il convient donc de résoudre un conflit concernant cet identifiant.

Dans la mesure où la disponibilité de l'identifiant UID est confirmée, le service Svli procède à une vérification de l'existence et des droits de l'utilisateur Usr correspondant à l'identifiant UsrID auprès d'un référentiel utilisateur Rf2. Selon une possibilité, ce référentiel Rf2 est mis en œuvre par le service fonctionnel Svc2. Dans ces conditions, le service Svc1 d'inscription envoie une demande de vérification dans une étape ECfsvc1i5.

Le service considéré Svc2 reçoit la demande MUsrDisp dans une étape ECfSvc25 et procède à la vérification dans une étape ECfSvc26. Le résultat de la vérification MUsrRDisp est communiqué au service Svc1 dans une étape EcfSvc27, qui le reçoit dans une étape ECfSvc1i7.

Si un compte utilisateur pour l'utilisateur Usr n'existe pas encore, une étape de création de compte utilisateur peut être réalisée à ce stade. S'il existe déjà la vérification du compte utilisateur peut comprendre une demande du mot de passe à l'utilisateur, comme cela est représenté dans une étape ECfUsr6.

Nous supposerons dans ce cas que la validité du compte utilisateur Usr a été constatée. Dans le cas contraire, cela signifie que la demande d'inscription ne peut aboutir car le compte utilisateur associé sur le service n'est pas valide. Il convient donc de déterminer un compte utilisateur valide sur ce service avant de poursuivre l'inscription.

Dans la mesure où la validité du compte utilisateur et de l'identifiant sont confirmée, le service Svc1i procède à une étape d'enregistrement du service Svc2. Selon une possibilité, cet enregistrement est opéré par le service de configuration Svclc.

Ainsi, dans une étape EcfSvcli8, le service Svc1i envoie une demande d'enregistrement MReg au service de configuration Svclc comprenant un choix de service fonctionnel Svc2, par exemple Samsung IOT ou Google IOT, l'identifiant de l'unité centrale de commande UID, un choix d'offre de service et d'éventuelles options de configuration. Le service de configuration Svclc reçoit cette demande dans une étape ECfSvc1c8.

Dans une étape d'enregistrement ECfSvclc9, le service Svclc procède à l'enregistrement dans le référentiel d'affectation Rf1 d'une association entre l'unité centrale de commande U ou de son identifiant UID en lien avec un service fonctionnel Svc2 et éventuellement avec des informations complémentaires de configuration Cfg1.

Le service Svclc envoie une confirmation MRUIn de cette inscription dans une étape ECfSvc1c10 au service Svc1i qui la reçoit dans une étape ECfSvc1i10.

Le service Svc1i procède ensuite à une inscription du service Svc2. Selon une possibilité, cette inscription est opérée par le service fonctionnel Svc2.

Ainsi, dans une étape EcfSvc1i11, le service Svc1i envoie une demande d'inscription MUsrln au service fonctionnel Svc2 comprenant, l'identifiant de l'unité centrale de commande UID, l'identifiant de l'utilisateur UsrID, un choix d'offre de service et d'éventuelles options de configuration. Le service fonctionnel reçoit cette demande dans une étape ECfSvc211.

Dans une étape de configuration/inscription ECfSvc212, le service Svc2 procède à l'inscription dans le référentiel utilisateur Rf2 d'une association entre l'unité centrale de commande U ou de son identifiant UID en lien avec un utilisateur Usr et éventuellement avec des informations complémentaires de configuration fonctionnelle Cfg2.

Le service Svc2 envoie une confirmation MRUsrIn de cette inscription dans une étape ECfSvc213 au service Svc1i qui la reçoit dans une étape ECfSvc1i13.

Le service Svc1i peut ensuite confirmer l'inscription à l'utilisateur Usr par l'intermédiaire de son terminal dans une étape EcfSvc1i14, la confirmation étant reçue dans une étape EcfUsr114.

Par la suite, il est procédé à un branchement ou à une initialisation de l'unité centrale de commande U dans une étape ECfU15. Ce branchement/initialisation peut être déclenché par une alimentation électrique ou par un ordre provenant dans une étape EcfUSr115 d'une instruction de l'utilisateur par une action physique sur l'unité centrale de commande U tel qu'un appui sur un bouton ou un envoi d'instruction par l'intermédiaire d'un terminal T. Dans le cadre de ce branchement ou suite à cette initialisation, l'unité centrale obtient, dans une étape EcfU16, l'identifiant de localisation Svc1cL du service de configuration qui peut correspondre à une URL, cet identifiant ayant été stocké préalablement, par exemple en usine, dans la mémoire de l'unité centrale de commande U.

L'unité centrale de commande U procède ensuite, dans une étape EcfU17 à une tentative de connexion vers le service de configuration SV1c en utilisant l'identifiant de localisation Svc1cL. Cette tentative de connexion MConn identifie l'unité centrale de commande par l'identifiant UID. Cette tentative de connexion correspond à une demande de configuration. Bien entendu, plusieurs étapes successives peuvent être réalisées correspondant à l'établissement d'une communication, puis à la demande de configuration.

Lorsque le branchement de l'unité centrale de commande est effectué avant que l'inscription ait été réalisée, le service Svclc peut indiquer à l'unité centrale de commande U qu'elle ne peut pas procéder à la configuration. L'unité centrale de commande U peut dans ce cas procéder à des demandes périodiquement.

A réception de cette demande de configuration dans une étape EcfSvc1c17, le service Svclc procède à une vérification dans une étape ECfSvc1c18 dans le référentiel d'affectation Rf1 afin de déterminer si l'identifiant UID est bien affecté, et quelles sont les données associées. En particulier, le service Svclc peut déterminer un service fonctionnel Svc2 associé et les informations de connexion associées, mais également des informations de configuration éventuelles Cfg1.

Le service Svclc peut ensuite renvoyer un ou plusieurs messages de configuration MCfg dans une étape ECfSvc1c19 qui sont reçus par l'unité centrale de commande U dans une étape ECfU19.

Dans une étape ECfU20, l'unité centrale de commande U procède à sa configuration sur la base des informations reçues du service dans le message MCfg, et notamment à l'enregistrement des données de connexion concernant le service fonctionnel Svc2 et d'autres éléments de configuration Cfg1.

L'identifiant d'un deuxième service distant fonctionnel peut comprendre par exemple : un nom d'hôte ou adresse IP du service ; un numéro de port à utiliser; un protocole à utiliser, par exemple HTTPS ou COAP.

Les autres informations de configuration dans l'ensemble de données de configuration Cfg1 peuvent comprendre : une adaptation de bande de fréquence, notamment en fonction de la position géographique ; une autorisation de l'utilisation de protocoles de communication déterminés; la réalisation de chargement de composants logiciels, par exemple des pilotes particuliers; la réalisation de mise à jour, éventuellement en fonction d'une zone géographique ; ou encore la configuration de l'interface graphique, comprenant par exemple le téléchargement de logos / icones ou de composants logiciels pour modifier l'apparence ou le comportement d'un afficheur.

Dans une étape EcfU21, l'unité centrale de commande U procède à l'établissement d'une connexion MConnF, permanente ou non, ou a l'émission d'information de façon périodique ou événementielle à destination du service fonctionnel Svc2 qui reçoit les informations correspondantes dans une étape ECfSvc221.

Selon une possibilité dans une étape ECfU22, l'unité centrale de commande U procède à une configuration complémentaire sur la base d'une partie de configuration Cfg2 en provenance du service fonctionnel Svc2 qui fourni cette configuration dans une étape EcfSvc222.

Cette configuration peut correspondre à un téléchargement d'un élément logiciel par exemple, ou à la réalisation d'une configuration complémentaire de services.

Dans une étape ECfUsr23, selon une possibilité l'utilisateur peut entamer une utilisation du service Svc2.

Selon une possibilité, une réinitialisation de l'unité centrale de commande U peut être prévue. Dans ce cas, une étape déclarative peut être réalisée auprès du service d'inscription Svc1i afin de réinitialiser les référentiels Rf1 et Rf2, par l'intermédiaire respectivement des services Svclc et Svc2. L'unité centrale de commande U peut ensuite être réutilisée dans une configuration différente, sur la base de choix communiqués par l'utilisateur.

## Revendications

1. Procédé de configuration d'une unité centrale de commande (U) comprenant au moins un module de communication destinée au contrôle et/ou à la commande d'au moins un dispositif domotique, ladite unité centrale de commande (U) appartenant à une installation domotique (Su) ou d'un dispositif domotique (D) comprenant une unité centrale de commande (U) et appartenant à une installation domotique (Su), le procédé étant mis en œuvre par l'unité centrale de commande (U) et comprenant les étapes suivantes :
- Obtention (EcfUl6) d'un identifiant de localisation (Svc1cL) d'un premier service distant de configuration (Svlc) ;
- Envoi (EcfUl7) d'une demande de configuration (MConn) à destination du premier service distant de configuration (Svclc) en utilisant l'identifiant de localisation (Svc1cL) et en lien avec un identifiant de l'unité centrale de commande (U) ;
- Réception (ECfUl9) d'au moins un ensemble de données ou d'instructions de configuration (cfg1) et/ou d'au moins un identifiant d'un deuxième service distant fonctionnel (Svc2) en provenance du premier service distant de configuration (Svclc) ;
- Configuration (ECfU20) sur la base de l'au moins un ensemble de données ou d'instructions de configuration (cfg1) et/ou de l'au moins un identifiant d'un deuxième service distant fonctionnel (Svc2) ;

2. Procédé selon la revendication 1, comprenant en outre l'étape suivante :
- Etablissement (EcfU21) d'une communication à destination du service fonctionnel (Svc2) ;

3. Procédé selon la revendication 2, comprenant en outre les étapes suivante :
- Réception (ECfU22) d'au moins un deuxième ensemble (cfg2) de données ou d'instructions de configuration en provenance du deuxième service distant fonctionnel (Svc2) ;
- Configuration (EcfU23) complémentaire sur la base du deuxième ensemble de données ou d'instructions de configuration (cfg2) ;

4. Procédé de configuration d'une unité centrale de commande (U) comprenant au moins un module de communication destinée au contrôle et/ou à la commande d'au moins un dispositif domotique, ladite unité centrale de commande (U) appartenant à une installation domotique (Su) ou d'un dispositif domotique (D) comprenant une unité centrale de commande (U) et appartenant à une installation domotique (Su), le procédé étant mis en œuvre par un premier service d'accès à distance de configuration (Svclc) exécuté par une unité de gestion (Sv1) et comprenant les étapes suivantes :
- Réception (EcfSvc1c17) d'une demande de configuration (MConn) en provenance de l'unité centrale de commande (U) en lien avec un identifiant de l'unité centrale de commande (U) ;
- Détermination (ECfSvc1c18) d'au moins un ensemble de données ou d'instructions de configuration (cfg1) et/ou d'au moins un identifiant d'un deuxième service distant fonctionnel (Svc2) associé à l'identifiant de l'unité centrale de commande (U) dans un référentiel d'affectation (Rf1) ;
- Envoi (ECfSvc1c19) d'un message de configuration comprenant l'au moins un ensemble de données ou d'instructions de configuration (cfg1) et/ou l'au moins un identifiant d'un deuxième service distant fonctionnel (Svc2) ;

5. Procédé selon la revendication 4, comprenant en outre les étapes suivantes :
- Réception d'une demande d'enregistrement (ECfSvclc8) en relation avec un identifiant unique (UID) de l'unité centrale de commande (U) ou du dispositif domotique (D) comprenant l'unité centrale de commande (U) et avec un deuxième service fonctionnel (Svc2) ;
- Enregistrement (ECfSvc1c9) dans un référentiel d'affectation (Rf1) d'une association entre l'unité centrale de commande (U) ou de son identifiant (UID) en lien avec un service fonctionnel (Svc2) ;

6. Procédé selon l'une des revendications 4 ou 5, comprenant en outre les étapes suivantes :
- Inscription (ECfSvc212) dans un référentiel utilisateur (Rf2) d'une association entre l'unité centrale de commande (U) ou de son identifiant (UID) en lien avec un utilisateur (Usr) ;

7. Procédé selon l'une des revendications 5 à 6, comprenant en outre les étapes suivantes :
- Vérification (ECfSvclc3) de la disponibilité de l'identifiant unique (UID) auprès d'un référentiel d'affectation (Rf1) ;

8. Procédé selon l'une des revendications 4 à 7, comprenant en outre les étapes suivantes :
- Vérification (EcfSvcli5) de l'existence et des droits de l'utilisateur (Usr) correspondant à l'identifiant (UsrID) auprès d'un référentiel utilisateur (Rf2).

## Patentansprüche

1. Verfahren zur Konfiguration einer zentralen Steuereinheit (U), die mindestens ein Kommunikationsmodul umfasst, das zur Kontrolle und/oder der Steuerung mindestens einer Heimautomatisierungsvorrichtung bestimmt ist, wobei die zentrale Steuereinheit (U) einer Heimautomatisierungsanlage (Su) oder einer Heimautomatisierungsvorrichtung (D) angehört, die eine zentrale Steuereinheit (U) umfasst und einer Heimautomatisierungsanlage (Su) angehört, wobei das Verfahren durch die zentrale Steuereinheit (U) umgesetzt wird und die folgenden Schritte umfasst:
- Erhalten (EcfU16) einer Lokalisierungskennung (Svc1cL) eines ersten Fernkonfigurationsdienstes (Sv1c);
- Senden (EcfU17) einer Konfigurationsanfrage (MConn) an einen ersten Fernkonfigurationsdienst (Sv1c) unter Verwendung der Lokalisierungskennung (Svc1cL) und in Verbindung mit einer Kennung der zentralen Steuereinheit (U);
- Empfangen (ECfU19) mindestens einer Reihe von Konfigurationsdaten oder -anweisungen (cfg1) und/oder mindestens einer Kennung eines zweiten Fernfunktionsdienstes (Svc2) von dem ersten Fernkonfigurationsdienst (Svc1c);
- Konfigurieren (ECfU20) auf der Basis der mindestens einen Reihe von Konfigurationsdaten oder -anweisungen (cfg1) und/oder der mindestens einen Kennung eines zweiten Fernfunktionsdienstes (Svc2);

2. Verfahren nach Anspruch 1, weiter den folgenden Schritt umfassend:
- Aufbauen (EcfU21) einer Kommunikation zum Funktionsdienst (Svc2);

3. Verfahren nach Anspruch 2, weiter die folgenden Schritte umfassend:
- Empfangen (ECfU22) mindestens einer zweiten Reihe (cfg2) von Konfigurationsdaten oder -anweisungen von dem zweiten Fernfunktionsdienst (Svc2);
- Ergänzendes Konfigurieren (EcfU23) auf der Basis der zweiten Reihe von Konfigurationsdaten oder -anweisungen (cfg2);

4. Verfahren zur Konfiguration einer zentralen Steuereinheit (U), das mindestens ein Kommunikationsmodul umfasst, das zur Kontrolle und/oder der Steuerung mindestens einer Heimautomatisierungsvorrichtung bestimmt ist, wobei die zentrale Steuereinheit (U) einer Heimautomatisierungsanlage (Su) oder einer Heimautomatisierungsvorrichtung (D) angehört, die eine zentrale Steuereinheit (U) umfasst und einer Heimautomatisierungsanlage (Su) angehört, wobei das Verfahren durch einen ersten Fernkonfigurationszugriffsdienst (Svc1c) umgesetzt wird, der durch eine Verwaltungseinheit (Sv1) ausgeführt wird, und die folgenden Schritte umfasst:
- Empfangen (EcfSvc1c17) einer Konfigurationsanfrage (MConn) von der zentralen Steuereinheit (U) in Verbindung mit einer Kennung der zentralen Steuereinheit (U);
- Bestimmen (EcfSvc1c18) mindestens einer Reihe von Konfigurationsdaten oder -anweisungen (cfg1) und/oder mindestens einer Kennung eines zweiten Fernfunktionsdienstes (Svc2), der der Kennung der zentralen Steuereinheit (U) zugeordnet ist, in einem Zuweisungsbezugssystem (Rf1);
- Senden (EcfSvc1c19) einer Konfigurationsnachricht, die mindestens eine Reihe von Konfigurationsdaten oder -anweisungen (cfg1) und/oder die mindestens eine Kennung eines zweiten Fernfunktionsdienstes (Svc2) umfasst;

5. Verfahren nach Anspruch 4, weiter die folgenden Schritte umfassend:
- Empfangen einer Speicherungsanfrage (ECfSvc1c8) in Bezug auf eine eindeutige Kennung (UID) der zentralen Steuereinheit (U) oder der Heimautomatisierungsvorrichtung (D), die die zentrale Steuereinheit (U) umfasst, und auf einen zweiten Funktionsdienst (Svc2);
- Speichern (ECfSvc1c9) in einem Zuweisungsbezugssystem (Rf1) einer Zuordnung zwischen der zentralen Steuereinheit (U) oder ihrer Kennung (UID) in Verbindung mit einem Funktionsdienst (Svc2);

6. Verfahren nach einem der Ansprüche 4 oder 5, weiter die folgenden Schritte umfassend:
- Eintragen (ECfSvc212) in ein Nutzerbezugssystem (Rf2) einer Zuordnung zwischen der zentralen Steuereinheit (U) oder ihrer Kennung (UID) in Verbindung mit einem Nutzer (Usr);

7. Verfahren nach einem der Ansprüche 5 bis 6, weiter die folgenden Schritte umfassend:
- Überprüfen (ECfSvc1c3) der Verfügbarkeit der eindeutigen Kennung (UID) beim Zuweisungsbezugssystem (Rf1);

8. Verfahren nach einem der Ansprüche 4 bis 7, weiter die folgenden Schritte umfassend:
- Überprüfen (ECfSvc1i5) der Existenz und der Nutzerrechte (Usr) entsprechend der Kennung (UsrID) bei einem Nutzerbezugssystem (Rf2).

## Claims

1. A method of configuring a central control unit (U) comprising at least one communication module intended for the monitoring and/or control of at least one home automation device, said central control unit (U) belonging to a home automation installation (Su) or a home automation device (D) comprising a central control unit (U) and belonging to a home automation installation (Su), the method being implemented by the central control unit (U) and comprising the following steps:
- Obtainment (EcfU16) of a location identifier (Svc1cL) of a first configuration remote service (Sv1c);
- Sending (EcfU17) of a configuration request (MConn) to the first configuration remote service (Svc1c) using the location identifier (Svc1cL) and linked to an identifier of the central control unit (U);
- Reception (ECfU19) of at least one set of configuration data or instructions (cfg1) and/or at least one identifier of a second functional remote service (Svc2) originating from the first configuration remote service (Svc1c);
- Configuration (ECfU20) based on at least one set of configuration data or instructions (cfg1) and/or at least one identifier of a second functional remote service (Svc2);

2. The method according to claim 1, further comprising the following step:
- Establishment (EcfU21) of a communication intended for the functional service (Svc2);

3. The method according to claim 2, further comprising the following steps:
- Reception (ECfU22) of at least one second set (cfg2) of configuration data or instructions originating from the second functional remote service (Svc2);
- Complementary configuration (EcfU23) based on the second set of configuration data or instructions (cfg2);

4. A method of configuring a central control unit (U) comprising at least one communication module intended for the monitoring and/or control of at least one home automation device, said central control unit (U) belonging to a home automation installation (Su) or a home automation device (D) comprising a central control unit (U) and belonging to a home automation installation (Su), the method being implemented by a first configuration remote access service (Svc1c) executed by a management unit (Sv1) and comprising the following steps:
- Reception (EcfSvc1c17) of a configuration request (MConn) originating from the central control unit (U) linked to an identifier of the central control unit (U);
- Determination (ECfSvc1c18) of at least one set of configuration data or instructions (cfg1) and/or at least one identifier of a second functional remote service (Svc2) associated with the identifier of the central control unit (U) in an allocation repository (Rf1);
- Sending (ECfSvc1c19) of a configuration message comprising at least one set of configuration data or instructions (cfg1) and/or at least one identifier of a second functional remote service (Svc2);

5. The method according to claim 4, further comprising the following steps:
- Reception of a recording request (ECfSvc1c8) in connection with a unique identifier (UID) of the central control unit (U) or of the home automation device (D) comprising the central control unit (U) and with a second functional service (Svc2);
- Recording (ECfSvc1c9) in an allocation repository (Rf1) of an association between the central control unit (U) or the identifier (UID) thereof linked to a functional service (Svc2);

6. The method according to any of claims 4 or 5, further comprising the following steps:
- Registration (ECfSvc212) in a user repository (Rf2) of an association between the central control unit (U) or the identifier (UID) thereof linked to a user (Usr);

7. The method according to any of claims 5 and 6, further comprising the following steps:
- Check-up (ECfSvc1c3) of the availability of the unique identifier (UID) before an allocation repository (Rf1);

8. The method according to any of claims 4 to 7, further comprising the following steps:
- Check-up (EcfSvc1i5) of the existence and rights of the user (Usr) corresponding to the identifier (UsrID) before a user repository (Rf2).
